# EUROPÄISCHE PATENTSCHRIFT

(11) **EP 0 811 146 B1**
(45) Veröffentlichungstag und Bekanntmachung des Hinweises auf die Patenterteilung: **24.10.2001**
(21) Anmeldenummer: 96905673.8
(22) Anmeldetag: 23.02.1996
(51) Int. Cl.: G01D 5/34, G01B 11/02

(54) **VERFAHREN ZUM MESSEN EINER LAGE EINER KANTE VON BAHNEN ODER BOGEN**
WEB OR SHEET EDGE POSITION MEASUREMENT PROCESS
PROCEDE PERMETTANT DE MESURER LA POSITION DU BORD DE BANDES OU DE FEUILLES

(30) Priorität: 24.02.1995 DE 19506467
(43) Veröffentlichungstag der Anmeldung: 10.12.1997
(73) Patentinhaber: Koenig & Bauer Aktiengesellschaft, 97080 Würzburg (DE)
(72) Erfinder: SCHWITZKY, Volkmar, Rolf, D-97076 Würzburg (DE)
(86) Internationale Anmeldenummer: DE9600299
(87) Internationale Veröffentlichungsnummer: WO9626417

(56) Entgegenhaltungen:
- DE-U- 8 320 768
- FR-A- 2 346 680
- US-A- 3 736 063
- US-A- 4 007 992
- US-A- 4 662 756

## Beschreibung

Die Erfindung betrifft ein Verfahren zum Messen einer Lage einer Kante von Bahnen oder Bogen mittels einer lichtelektrischen Meßeinrichtung gemäß dem Oberbegriff des Anspruches 1.

Aus der DE-OS 22 02 087 ist eine Meßeinrichtung zur lichtelektrischen Messung einer Lage von Bogenkanten bezüglich einer Bezugslinie bekannt. Von einer Beleuchtungseinrichtung ausgehendes Licht wird von einem lichtelektrischen Empfänger aufgefangen. Entsprechend der Lage der zwischen Beleuchtungseinrichtung und Empfänger eingebrachten Bogenkante wird ein Videosignal erzeugt.
Das lichtelektrische Empfangsteil besteht aus einer Vielzahl von in geringem Abstand hintereinander angeordneten einzelnen Photoelementen.

Nachteilig ist hierbei, daß schon kleinste Beschädigungen oder Fasern an der zu messenden Bogenkante zu Fehlmessungen führen, da sich diese Beschädigungen unmittelbar auf das Meßergebnis auswirken.

Die DE 83 20 768 U1 offenbart eine Vorrichtung zum Messen einer Lage einer Kante von einer Fliese, in der verschiedene Parameter gemessen werden. Diese Parameter werden aber nicht zur Ausfilterung von bestimmten Anomalien in der Auswertung benutzt.

Der Erfindung liegt die Aufgabe zugrunde, ein Verfahren zum Messen einer Lage einer Kante von Bahnen oder Bogen mittels einer lichtelektrischen Meßeinrichtung zu schaffen, bei der bzw. bei dem trotz kleiner Beschädigungen oder über eine senkrechte Projektion der Kante herausragender Fasern, z. B. sogenannter Anomalien, im Meßbereich der zu messenden Kante von Bahnen oder Bogen die tatsächliche Lage der Kante bezüglich dieser Meßeinrichtung hinreichend genau bestimmt wird.

Diese Aufgabe wird erfindungsgemäß durch ein Verfahren zum Messen der Lage einer Kante von Bahnen oder Bogen mit den Merkmalen der kennzeichnenden Teile des Anspruches 1.

In vorteilhafter Weise wird durch das erfindungsgemäße Verfahren eine Lage einer zu messenden Kante von Bahnen oder Bogen an einer Mehrzahl von dicht nebeneinander liegenden Stellen der Kante ermittelt. Dadurch können Meßwerte von Stellen an denen Anomalien auftreten, vernachlässigt werden oder die Meßwerte mittels dem erfindungsgemäßen Verfahren so aufgearbeitet werden, daß trotz Anomalien eine ausreichend genaue Ermittlung der Lage der Kante erfolgt.
Vorteilhaft ist zudem, daß bei einer nicht ideal geraden Kante der Bahnen oder Bogen eine virtuelle Gerade entlang eines betrachteten Bereiches der Kante berechnet werden kann und diese als Maß der Lage der Kante zur Weiterverarbeitung dient. Durch die Verwendung von einem Lichtstrahlenbündel mit parallelen Strahlen wird eine scharfe Abbildung der Kante erreicht. Eine einzige Beleuchtungseinrichtung für alle photoelektrische Empfänger reduziert die Bauteile und damit die Kosten.

Die erfindungsgemäße Vorrichtung und das erfindungsgemäße Verfahren sind in der Zeichnung dargestellt und werden im folgenden näher beschrieben.

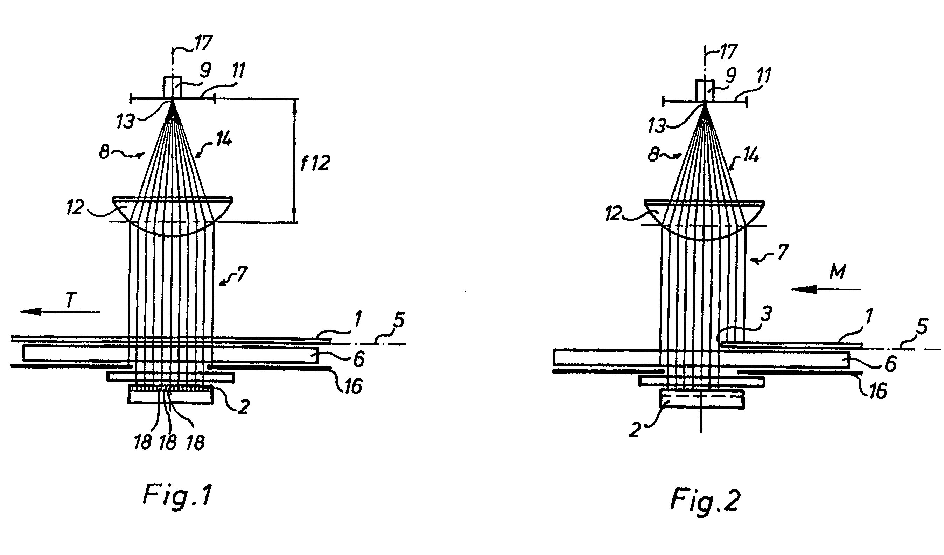

Es zeigen
- Fig. 1: eine schematische Seitenansicht einer Vorrichtung zur Durchführung des erfindungsgemäßen Verfahren senkrecht zur Transportrichtung der Bahn;
- Fig. 2: einen schematischen Seitenansicht der Vorrichtung zur Durchführung des erfindungsgemäßen Verfahren in Transportrichtung der Bahn;

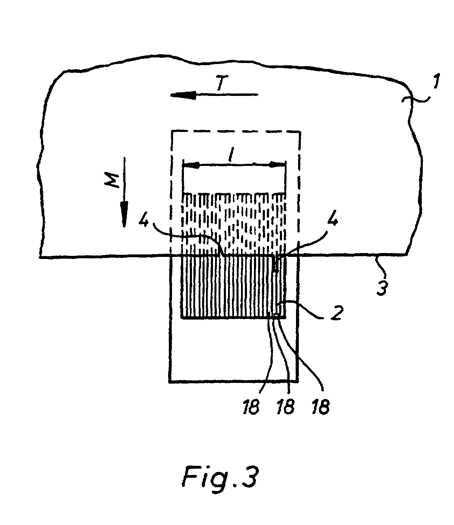

- Fig. 3: eine schematische Draufsicht auf eine Mehrzahl von photoelektrischen Empfängern mit der Bahn.

Eine zu messende Bahn 1 oder ein Bogen wird zumindest im Meßbereich zur Bestimmung seiner Lage bezüglich einer Anzahl von photoelektrischen Empfängern 2 von einer in Form einer Geraden verlaufenden Kante 3 begrenzt. Diese Bahn 1 oder dieser Bogen ist im wesentlichen Lichtabsorbierend. Bei dieser Bahn 1 oder diesem Bogen handelt es sich vortugsweise um Papierbahnen bzw. Papierbogen, insbesondere in Rotationsdruckmaschinen, aber auch um anderes bahn- oder tafelförmiges Gut, wie z. B. Blech oder Folien. Im folgenden wird diese beschriebene Bahn 1 oder dieser Bogen vereinfachend Bahn 1 genannt.
Die zu messende Kante 3 der Bahn 1 kann Anomalien 4 in Form von z. B. kleinen Beschädigungen, Einrissen oder über eine senkrechte Projektion der Kante 3 hervorstehender Fasern aufweisen.

Die Bahn 1, die von der Anomalien 4 aufweisenden Kante 3 begrenzt wird, wird auf einem Objektträger 6 in ein paralleles Lichtstrahlenbündel 7 einer Beleuchtungseinrichtung 8 eingebracht. Die Beleuchtungseinrichtung 8 besteht im wesentlichen aus einer diffus strahlenden Lichtquelle 9, beispielsweise einer Infrarot (IR) - Lichtquelle 9, einer Blende 11 und einem Kondensor. 12.
Direkt nach der IR - Lichtquelle 9, die Licht mit einer Wellenlänge von z. B. 750 nm ausstrahlt, ist die Blende 11 mit einer sehr kleinen Blendenöffnung 13 (z. B. einer Bohrung mit ca. 0,05 mm bis 1 mm Durchmesser) angeordnet. Hiermit wird eine annähernd punktförmige IR - Lichtquelle 9 erzeugt. In einem Abstand f12, der einer Brennweite f12 des Kondensors 12 entspricht, befindet sich der Kondensor 12, d. h. die IR - Lichtquelle 9 steht im vorderen Brennpunkt des Kondensors 12. Als Kondensor 12 dient im dargestellten Beispiel eine asphärische Linse, wobei der Kondensor 12 aber auch aus mehreren Linsen, z. B. einer Kombination aus einer Konkavkonvexlinse und einer oder mehreren asphärischen Linsen bestehen kann. Der Kondensor 12 parallelisiert im vorliegenden Beispiel die von der punktförmigen IR - Lichtquelle 8 ausgehenden Lichtstrahlen 14 zu einem Lichtstrahlenbündel 7 mit parallelen Strahlen.
Dieses parallele Lichtstrahlenbündel 7 kann auch beispielsweise mittels eines Laservorhanges oder eines Laseraufweitungssystemes erzeugt werden.
Im vorliegenden Ausführungsbeispiel beleuchtet ein Lichtstrahlenbündel 7 alle photoelektrischen Empfänger 2 gemeinsam.

Das Lichtstrahlenbündel 7 geht von der BeLeuchtungseinrichtung 8 aus, durchdringt den Objektträger 6 sowie einen IR-Filter 16 und trifft auf die photoelektrischen Empfänger 2.
Der IR-Filter 16 hat die Aufgabe Tageslicht zu eliminieren. Beleuchtungseinrichtung 8, Objektträger 6, IR-Filter 16 und photoelektrische Empfänger 2 sind entlang einer optischen Achse 17 angeordnet.
Somit wird auf den photoelektrischen Empfängern 2 die Kante 3 bzw. ein Schatten der Bahn 1 abgebildet.

Eine Mehrzahl, d.h. mindestens drei, photoelektrische Empfänger 2 sind in einer kurzen, sich parallel zur zu messenden Kante erstreckenden Länge l dicht nebeneinander angeordnet. Die Länge l ist vorzugsweise kleiner als 50 mm. Hierzu können beispielsweise mit einer Vielzahl von Photoelementen versehene photoelektrische Empfänger 2, wie ein an sich bekanntes CCD-Feld 2 oder mehrere dicht nebeneinander angeordnete CCD-Zeilensensoren 2 (charged coupled device), eingesetzt werden. Eine Zeile 18 dieses CCD-Feldes 2 oder der CCD-Zeilensensor 2 kann aus z. B. 1728 in einer Zeile 18 angeordneten Meßelementen bestehen. Diese Meßelemente sind z. B. 10 µm x 13 µm groß und ein Mittenabstand zwischen zwei Meßelementen beträgt 10 µm, d. h. auf einen Millimeter kommen 100 Meßelemente.
Im vorliegenden Beispiel wird die Lage der Kante 3 der Bahn 1 senkrecht zu einer Transportrichtung "T" der Bahn 1 in einer Meßrichtung "M" ermittelt. Deshalb sind die einzelnen Zeilen 18 des CCD-Feldes 2 in einer sich senkrecht zur Transportrichtung "T" derart angeordnet, daß die Zeilen 18 im Bereich der zu messenden Kante 3 von der Bahn 1 teilweise überdeckt werden. Die Meßrichtung "M" Liegt parallel zu einer von der Bahn 1 aufgespannten Ebene 5 und senkrecht zur zu messenden Kante 3.

Jede Zeile 18 des CCD-Feldes 2 wird mittels einer geeigneten Auswerteelektronik ausgewertet, so daß eine Mehrzahl von Meßwerten, zumindest drei, für die Lage der Kante 3 der Bahn 1 vorliegen. Diese Meßwerte entsprechen den Lagen von nebeneinander Liegenden differentiell kleinen Teilen der Kante 3 der Bahn 1. Befindet sich nun eine oder mehrere Anomalien 4 im Meßbereich, weichen die entsprechenden Extremwerte von den übrigen Meßwerten ab. Diese Extremwerte werden bei der Auswertung nicht berücksichtigt, indem z. B. ein Mittelwert aller Meßwerte gebildet wird und alle eine Toleranzgrenze überschreitenden Meßwerte nicht zur weiteren Berechnung herangezogen werden. Mit den verbleibenden Meßwerten wird erneut ein Mittelwert gebildet, der dann zur weiteren Verarbeitung das ermittelten Meßergebnis für die Lage der Kante 3 darstellt.
Ebenso ist es möglich, mittels anderer mathematischer Verfahren wie z. B. Regressionsgeraden, statistische Häufigkeitsverteilung, kleinste Fehlerquadrate usw. eine der Lage der Kante 3 entsprechende Gerade zu ermitteln und diese zur weiteren Verarbeitung heranzuziehen.

### Teileliste

- 1: Bahn
- 2: photoelektrischer Empfänger (CCD-Feld, CCD-Zeilensensor)
- 3: Kante (1)
- 4: Anomalie (3)
- 5: Ebene (1)
- 6: Objektträger
- 7: Lichtstrahlenbündel, parallel,
- 8: Beleuchtungseinrichtung
- 9: Lichtquelle (8)
- 10: -
- 11: Blende (8)
- 12: Kondensor (8)
- 13: Blendenöffnung (11)
- 14: Lichtstrahlen
- 15: -
- 16: IR-Filter
- 17: optische Achse
- 18: Zeile (2)

- f12: Abstand

- L: Länge

- M: Meßrichtung
- T: Transportrichtung

## Patentansprüche

1. Verfahren zum Messen einer Lage einer Kante (3) einer Bahn (1) oder eines Bogens mittels einer lichtelektrischen Meßeinrichtung bestehend aus einer Beleuchtungseinrichtung (8) und einem photoelektrischen Empfänger (2), **dadurch gekennzeichnet, daß** mindestens drei Meßwerte einer Lage einer Kante (3) in einer Rotationsdruckmaschine ermittelt werden, daß auf Anomalien der Kante (3) zurückzuführende Extremwerte der Meßwerte nicht berücksichtigt werden, daß aus den übrigen Meßwerten mittels mathematischer Verfahren ein Meßergebnis mit vernachlässigbarem Einfluß der Anomalien gebildet wird.

2. Verfahren nach Anspruch 1, **dadurch gekennzeichnet, daß** zur Bildung des Meßergebnisses Mittelwerte aus den Meßwerten gebildet werden, daß alle eine Toleranzgrenze der Mittelwerte überschreitenden Meßwerte zur weiteren Berechnung nicht herangezogen werden.

## Claims

1. Method for measuring a position of an edge (3) of a web (1) or a sheet by means of a photoelectric measuring device comprising an illuminating device (8) and a photoelectric receiver (2), **characterized in that** at least three measured values of a position of an edge (3) in a rotary printing machine are determined, **in that** extreme values of the measured values attributable to anomalies of the edge (3) are not taken into account, **in that** a measurement result with negligible influence of the anomalies is formed from the remaining measured values by means of mathematical methods.

2. Method according to Claim 1, **characterized in that**, in order to form the measurement result, average values are formed from the measured values, **in that** all measured values which exceed a tolerance limit of the average values are not used for the further calculation.

## Revendications

1. Procédé permettant de mesurer la position du bord (3) d'une bande (1) ou d'une feuille au moyen d'un dispositif de mesure photoélectrique, constitué d'un dispositif d'illumination (8) et d'un récepteur de photoélectrique (2), **caractérisé en ce qu'**au moins trois valeurs de mesure d'une position d'un bord (3) dans une machine à imprimer rotative sont déterminées, **en ce que** l'on ne prend pas en considération les valeurs extrêmes mesurées, à imputer à des anomalies du bord (3), **en ce que**, à partir des autres valeurs de mesure, à l'aide d'une méthode mathématique, on forme un résultat de mesure dans lequel les anomalies n'ont qu'une influence négligeable.

2. Procédé selon la revendication 1, **caractérisé en ce que**, pour former le résultat de mesure, on forme des valeurs moyennes à partir des valeurs de mesure, **en ce que** toutes les valeurs de mesure dépassant une limite de tolérance des valeurs moyennes sont éliminées pour la suite du calcul.
